(19) Europäisches Patentamt
European Patent Office
Office européen des brevets

(11) **EP 0 878 704 B1**

(12) **EUROPÄISCHE PATENTSCHRIFT**

(45) Veröffentlichungstag und Bekanntmachung des Hinweises auf die Patenterteilung:
**09.11.2005 Patentblatt 2005/45**

(51) Int Cl.[7]: **G01N 21/47**, G01J 3/50

(21) Anmeldenummer: **97107780.5**

(22) Anmeldetag: **13.05.1997**

(54) **Remissionsmessvorrichtung**

Reflectance measurement apparatus

Dispositif de mesure de réflexion

(84) Benannte Vertragsstaaten:
**CH DE FR GB IT LI**

(43) Veröffentlichungstag der Anmeldung:
**18.11.1998 Patentblatt 1998/47**

(73) Patentinhaber: **Gretag-Macbeth AG**
**8105 Regensdorf (CH)**

(72) Erfinder:
• **Benz, Christian**
**5430 Wettingen (CH)**
• **Senn, Thomas**
**8157 Dielsdorf (CH)**

(74) Vertreter: **Schwabe, Hans-Georg**
**Patentanwälte Schwabe, Sandmair, Marx**
**Stuntzstrasse 16**
**81677 München (DE)**

(56) Entgegenhaltungen:
**EP-A- 0 331 629** **EP-A- 0 383 209**
**WO-A-92/15859** **WO-A-96/42010**

**Beschreibung**

Die Erfindung betrifft eine Vorrichtung zur Messung von optischen Remissionswerten eines Messobjekts gemäss dem Oberbegriff des unabhängigen Anspruchs. Insbesondere betrifft die Erfindung ein Spektralphotometer.

Typische Vertreter von Messvorrichtungen, insbesondere Spektralphotometern der gattungsgemässen Art sind beispielsweise in den US-Patentschriften US-A-4 968 140, US-A-4961 646 und US-A-4 929 084 (entsprechend EP-B-0 328 483, EP-B-0331 629 und EP-B-0 327 499) beschrieben. Diese rechnergesteuerten Messvorrichtungen sind als Handgeräte ausgebildet und weisen einen beweglichen Messkopf auf, der für den Messvorgang aus dem Gehäuse ausgefahren und anschliessend wieder in das Gehäuse zurückgezogen wird.

Wie viele Messgeräte müssen auch Messvorrichtungen der gattungsgemässen Art regelmässig kalibriert bzw. z.B. hinsichtlich ihrer spektralen Eichung überprüft werden, wenn die Zuverlässigkeit der Messresultate gewährleistet sein soll. Dies erfolgt in der Regel durch Ausmessen von speziellen, auf das jeweilige Messgerät abgestimmten Kalibriermessobjekten (Kalibrierstandards), die als separate Teile mit der Messvorrichtung geliefert werden. Die dabei ermittelten Messwerte werden durch den Rechner in Verbindung mit entsprechenden gespeicherten Referenzwerten ausgewertet, um entweder eine Aussage über die zu überprüfenden Eigenschaften der Messvorrichtung zu erhalten oder die Kalibration automatisch durchzuführen, sofern die Messvorrichtung mit solchen Funktionen ausgestattet ist.

Diese Kalibrier- und Überprüfungsvorgänge bedürfen einer speziellen Sorgfalt und Regelmässigkeit. So müssen diese Vorgänge in den vorgeschriebenen Zeitintervallen durchgeführt werden, und die Positionierung der Messvorrichtung bzw. ihres Messkopfs relativ zum Kalibriermessobjekt muss korrekt sein, um die Messresultate nicht negativ zu beeinflussen.

Durch die vorliegende Erfindung soll nun eine Messvorrichtung der gattungsgemässen Art dahingehend verbessert werden, dass die Kalibrierung und Überprüfung der Vorrichtung für den Benutzer einfacher und zuverlässiger wird. Insbesondere soll sich der Benutzer um die Kalibrierung und die Überprüfung überhaupt nicht kümmern müssen, d.h. diese Vorgänge sollen durch die Vorrichtung selbsttätig erfolgen.

Die Lösung dieser der Erfindung zugrundeliegenden Aufgabe ergibt sich aus den im kennzeichnenden Teil des unabhängigen Anspruchs 1 beschriebenen Merkmalen. Besonders vorteilhafte Ausgestaltungen und Weiterbildungen sind Gegenstand der abhängigen Ansprüche 2-13.

Die erfindungsgemässe Messvorrichtung enthält also mindestens ein Kalibriermessobjekt, welches fest in die Vorrichtung eingebaut ist und vom Messkopf angefahren werden kann. Beispielsweise kann das oder ein Kalibriermessobjekt in der Ruheposition des Messkopfs angeordnet sein. Auf diese Weise ist es möglich, das oder die Kalibriermessobjekte selbsttätig nach einem vorgegebenen Programm auszumessen und die entsprechenden Kalibrier- oder Überprüfungsvorgänge durchzuführen. Die Messung erfolgt dabei stets korrekt und in derselben Weise und kann nicht vergessen werden, und das oder die Kalibriermessobjekte sind stets verfügbar und können nicht mit zu anderen Messvorrichtungen gehörenden ähnlichen Kalibriermessobjekten verwechselt werden, wie dies bei herkömmlichen Messvorrichtungen mit separaten Kalibriermessobjekten in der Praxis häufig der Fall ist.

Im folgenden wird die Erfindung anhand der Zeichnung näher erläutert. Es zeigen:

Fig. 1    eine Prinzipskizze eines Ausführungsbeispiels der erfindungsgemässen Vorrichtung,

Fig. 2-3    eine schematische Darstellung der Vorrichtung nach Fig. 1 mit dem Messkopf in Ruheposition und

Fig. 3    eine schematische Darstellung der Vorrichtung nach Fig. 1 mit dem Messkopf in Messposition.

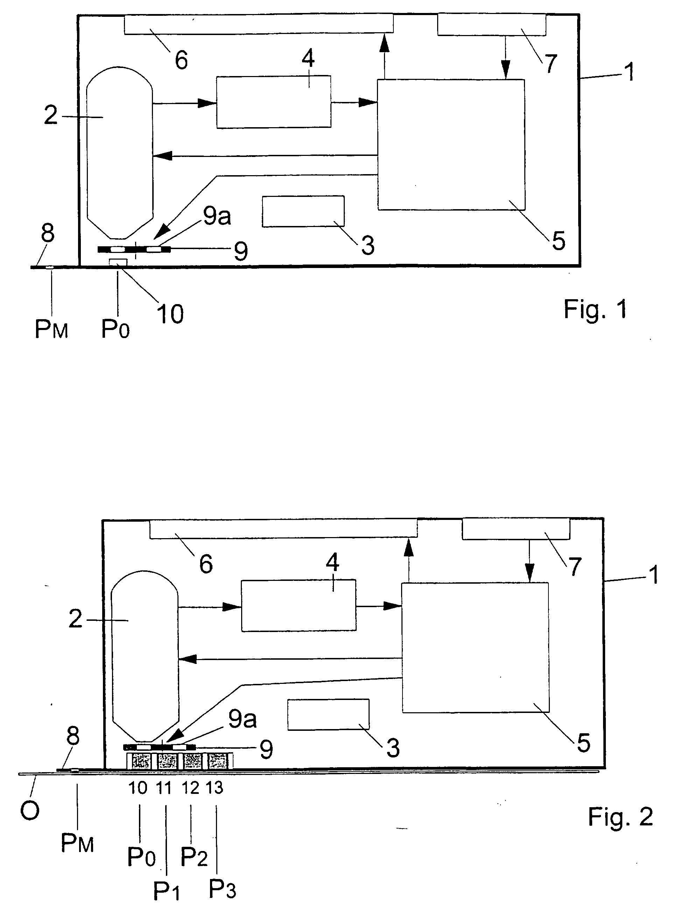

Die dargestellte, als Handmessgerät ausgebildete Messvorrichtung umfasst gemäss Fig.1 ein im wesentlichen quaderförmiges Gehäuse 1, in bzw. an welchem sämtliche anderen Funktionselemente der Vorrichtung untergebracht sind. Im einzelnen sind dies ein beweglicher Messkopf 2, eine Antriebsvorrichtung 3 zur Bewegung des Messkopfs 2, eine optoelektrische Wandlereinrichtung 4, ein Rechner 5, eine Anzeigevorrichtung 6 und Bedienungsorgane in Form einer Tastatur 7. Ferner ist das Gehäuse 1 mit einem Visier 8 versehen, welches zur Positionierung der Messvorrichtung auf einem Messobjekt O dient. Unterhalb des Messkopfs 2 ist ein mit diesem mitbewegliches Filterrad 9 vorgesehen, mittels welchem mehrere unterschiedliche Filter 9a selektiv in den Messstrahlengang eingebracht werden können.

Normalerweise befindet sich der Messkopf 2 in einer Ruheposition $P_0$ innerhalb des Gehäuses 1. Wenn ein Messvorgang z.B. durch Betätigen eines entsprechenden Bedienungsorgans ausgelöst wird, wird der Messkopf 2 mittels der Antriebsvorrichtung 3 aus dem Gehäuse 1 in eine Messposition $P_M$ ausgefahren, in welcher er sich genau oberhalb des Visiers 8 befindet. Nach Beendigung des Messvorgangs wird der Messkopf 2 wieder in seine Ruheposition $P_0$ innerhalb des Gehäuses 1 zurückverschoben. Die Wandlereinrichtung 4 befindet sich mit dem Messkopf 2 auf einem nicht gezeigten Wagen und wird zusammen mit dem Messkopfbewegt.

Beim Messvorgang beaufschlagt der Messkopf 2 ein unter ihm bzw. unterhalb des Visiers 8 positioniertes Messobjekt O mit aus einer in ihm befindlichen Lichtquelle stammenden Messlicht in einem genormten Winkelbereich und fängt das vom Messobjekt in einen genormten Winkelbereich remittierte Licht auf und leitet es an die Wandlereinrichtung 4 weiter. Die spektrale Zusammensetzung des Messlichts und des aufgefangenen remittierten Lichts kann dabei durch Positionierung eines der Filter 9a des Filterrads 9 in der für die gewählte Art der Messung erforderlichen Weise beeinflusst werden. Die Positionierung der Filter 9a kann gewünschtenfalls auch nur im Beleuchtungsstrahlengang oder nur im Auffangstrahlengang erfolgen, wobei eben nur das Messlicht oder nur das remittierte Licht beeinflusst würde. In der Wandlereinrichtung 4 wird das aufgefangene Licht spektralphotometrisch analysiert, d.h. es werden die Remissionen in z.B. 36 etwa 10 nm breiten Wellenlängenbereichen im sichtbaren Bereich des Spektrums (380-730 nm) gemessen und in entsprechende elektrische Signale umgewandelt. Diese Signale werden dann dem Rechner 5 zugeführt und von diesem zur Bestimmung von für die jeweilige Messung interessierenden Messwerten, beispielsweise Farbkoordinaten nach CIE, verarbeitet. Diese Messwerte werden dann auf die Anzeigevorrichtung ausgegeben. Alle Messfunktionen und mechanischen Abläufe der Vorrichtung werden vom Rechner 5 gesteuert.

Soweit entspricht die dargestellte Messvorrichtung in Aufbau und Funktion voll und ganz dem in den eingangs erwähnten US-Patentschriften US-A-4 968 140, US-A-4961 646 und US-A-4 929 084 im Detail beschriebenen Hand-Spektralphotometer, so dass der Fachmann keiner näheren Erläuterung bedarf. Die genannten US-Patentschriften werden hiermit ausdrücklich zum integrierenden Bestandteil der vorliegenden Erfindungsbeschreibung erklärt.

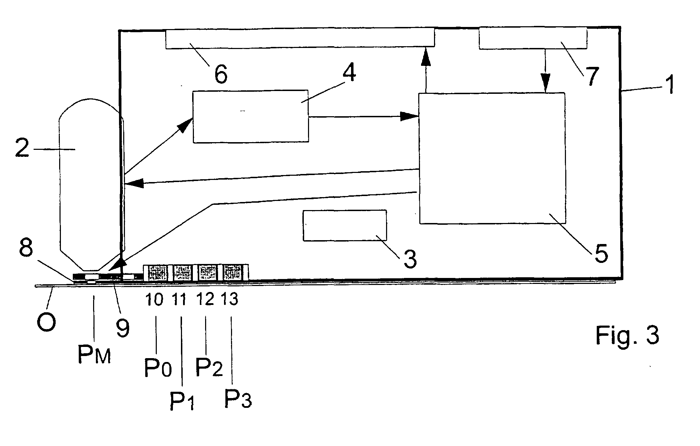

Der wesentliche, erfindungsgemässe Unterschied gegenüber den bekannten Messvorrichtungen dieser Art wird aus den schematischen Darstellungen der Figuren 2 und 3 deutlich. Die erfindungsgemässe Messvorrichtung ist mit einer Reihe von internen Kalibriermessobjekten 10-13 ausgestattet, welche innerhalb des Gehäuses in entsprechenden Kalibriermesspositionen $P_0$-$P_3$ angeordnet sind. Eine dieser Kalibriermesspositionen ist im gezeigten Ausführungsbeispiel gleichzeitig die Ruheposition des Messkopfs, muss sie aber nicht sein. Die Antriebsvorrichtung 3 ist so ausgebildet, dass sie, gesteuert vom Rechner 5, den Messkopf 2 selektiv in jede dieser Kalibriermesspositionen $P_0$-$P_3$ verfahren und positionieren kann. Gleichzeitig ist der Rechner 5 so ausgebildet bzw. programmiert, dass er in jeder dieser Kalibriermesspositionen $P_0$-$P_3$ gleich wie in der Messposition $P_M$ einen Messvorgang auslösen und durchführen kann. Die Kalibriermessobjekte 10-13 sind im Gehäuse 1 so angeordnet, dass sie dieselbe Lage relativ zum in der jeweiligen Kalibriermessposition befindlichen Messkopf einnehmen wie das Messobjekt O, wenn sich der Messkopf in der Messposition $P_M$ befindet.

Bei den erfindungsgemäss im Gehäuse 1 der Vorrichtung angeordneten internen Kalibriermessobjekten 10-13 kann es sich um je nach Bestimmungszweck unterschiedliche Referenzobjekte handeln. Für eine Absolutweisskalibrierung ist ein Weiss-Standard erforderlich, für die Überprüfung der spektralen Eichung werden verschiedene Farb-Standards eingesetzt. Des weiteren können auch densitometrische Prüfkachel als Kalibriermessobjekte verwendet werden. Mittels der erfindungsgemäss in das Gehäuse eingebauten Kalibriermessobjekte ist es möglich, die für die verschiedenen Kalibrier- und Überprüfungsvorgänge erforderlichen Messungen an den Kalibriermessobjekten zeit-, ereignis- oder benutzergesteuert automatisch durchzuführen.

Für das folgende wird beispielsweise davon ausgegangen, dass sich in der Ruheposition und gleichzeitig Kalibrierposition $P_0$ ein Weiss-Standard 10 für die Absolutweisskalibrierung der Messvorrichtung und in den übrigen Kalibrierpositionen $P_1$-$P_3$ je ein Farb-Standard 11-13 für die Überprüfung der spektralen Eichung der Messvorrichtung befinden. Wenn nur die Absolutweisskalibrierung oder nur die Überprüfung der spektralen Eichung erforderlich ist, können die jeweils nicht erforderlichen Kalibriermessobjekte selbstverständlich fehlen. Die Anordnung der einzelnen Kalibriermessobjekte 10-13 in den Kalibriermesspositionen $P_0$-$P_3$ kann selbstverständlich auch anders gewählt sein. Ferner können für andere Arten von Überprüfungen auch andere Kalibriermessobjekte vorgesehen sein.

Die Vorrichtung kann durch entsprechende Programmierung des Rechners 5 beispielsweise dazu ausgebildet sein, unmittelbar vor jedem normalen Messvorgang eine automatische Absolutweisskalibrierung durchzuführen. Auf diese Weise lässt sich die Unstabilität der Lichtquelle im Messkopf auskorrigieren und damit eine Stabilisierung der Messwerte erreichen. Wenn der Messvorgang z.B. manuell durch den Benutzer ausgelöst wird, befindet sich der Messkopf zunächst noch in der Ruheposition $P_0$ über dem Weiss-Standard 10. Der Rechner 5 veranlasst nun zunächst die Ausmessung des Weiss-Standards 10 und die automatische Absolutweisskalibrierung. Danach wird der Messkopf 2 in die Messposition $P_M$ ausgefahren und die Ausmessung des Messobjekts O vorgenommen. Anschliessend wird der Messkopf wieder in seine Ruheposition $P_0$ zurückgefahren, die Messresultate werden berechnet und angezeigt.

Für die Absolutweisskalibrierung wird der Weiss-Standard 10 ausgemessen und die dabei gewonnenen Kalibriermesswerte werden zusammen mit im Rechner 5 gespeicherten Referenzmesswerten in an sich bekannter Weise zur automatischen Kalibrierung der Vorrichtung herangezogen. Die automatische Kalibrierung selbst erfolgt, wie schon gesagt, in herkömmlicher Weise und ist an sich nicht Gegenstand der Erfindung.

Die Ausmessung des Weiss-Standards kann für die Absolutweisskalibrierung auch durch eines oder mehrere der Filter 9a des Filterrads 9 erfolgen. Wenn die Vorrichtung korrekt eingestellt ist, z.B. noch vor oder kurz nach der Auslieferung, können die dabei gewonnenen Kalibriermesswerte auch als Referenzmesswerte für die spätere Verwendung gemäss vorstehender Beschreibung im Rechner abgespeichert werden. Die Messvorrichtung ist dazu mit einem entsprechenden Betriebsmodus ausgestattet.

Eine Möglichkeit zur Überprüfung der spektralen Eichung und damit der korrekten Einstellung und Zuverlässigkeit der Messvorrichtung besteht darin, z.B. den Weiss-Standard 10 durch ein im Filterrad 9 vorgesehenes sog. Bandenglas zu messen. Ein geeignetes Bandenglas ist z.B. der Typ BG 36 der Firma Schott. Hierbei werden die spektralen Remissionen des Weiss-Standards als Kalibriermesswerte bestimmt und mit den entsprechenden gespeicherten Referenzmesswerten verglichen. Als Qualitätskriterium wird ein Abweichungswert verwendet, der z.B. als Quadratwurzel aus der Summe der Quadrate der Differenzen zwischen den gemessenen Kalibriermesswerten und den gespeicherten Referenzmesswerten berechnet wird. Ist der Abweichungswert über einer vorgegebenen Toleranzschwelle, so zeigt der Rechner 5 dies in geeigneter Weise, z. B. durch einen entsprechenden Alarm-Hinweis mittels der Anzeigevorrichtung 6 an. Alternativ oder zusätzlich kann der Alarm-Hinweis über die bei modernen Messvorrichtungen dieser Art übliche Schnittstelle an einen externen Rechner ausgegeben werden.

Die spektrale Eichung der Messvorrichtung lässt sich auch anhand der Farb-Standards 11-13 überprüfen. Hierzu werden die Farb-Standards spektral ausgemessen und als Kalibriermesswerte ihre jeweiligen Farbkoordinaten z.B. nach CIELAB bestimmt. Diese Farbkoordinaten werden mit den entsprechenden gespeicherten Referenz-Farbkoordinaten der Farb-Standards verglichen und die jeweiligen Farbabstände ermittelt. Wenn einer oder mehrere der so ermittelten Farbabstände über einer voreingestellten Toleranzschwelle liegt bzw. liegen, erzeugt der Rechner 5 einen entsprechenden Alarm-Hinweis. Auch diese Überprüfung kann bei verschiedenen Stellungen des Filterrads 9, also mit verschiedenen Filtern 9a erfolgen. Die Filter 9a sind im übrigen die herkömmlichen, bei solchen Messvorrichtungen üblicherweise eingesetzten Filter, beispielsweise UV-Cut-Filter, D65-Filter, Polarisations-Filter und dergleichen.

Ebenfalls möglich ist die Überprüfung der Linearität des Messsystems der Vorrichtung durch Ausmessen eines Dichtestufenkeils (Graustufenkeils), der z.B. durch Kalibriermessobjekte in Form einer schwarzen, zweier grauer und einer weissen Kachel realisiert sein kann. Für jede der (hier beispielsweise vier) Kacheln (Kalibriermessobjekte) des Graustufenkeils werden die spektralen Remissionen über den sichtbaren Spektralbereich gemessen und mit entsprechenden gespeicherten Referenzwerten verglichen. Als Qualitätsmass wird für jeden Wellenlängenbereich j ein Wert $K_j$ nach der Formel:

$$K_j = \sqrt{\sum_{i=1}^{4} (R_{M_{i,j}} - R_{S_{i,j}})^2}$$

gebildet, worin $R_{M_{i,j}}$ und $R_{S_{i,j}}$ die an der Kachel i gemessenen spektralen Remissionswerte bzw. die entsprechenden gespeicherten Referenzwerte für die Wellenlänge j bedeuten. Falls einer oder mehrere der Werte $K_j$ eine bestimmte Toleranzgrenze übersteigen, wird ein entsprechender Alarm-Hinweis ausgegeben.

Wie schon-erwähnt, kann die automatische Kalibrierung öder Überprüfung der Messvorrichtung auch zeit- oder ereignisgesteuert erfolgen. So kann der Rechner 5 beispielsweise so programmiert sein, dass er eine Überprüfung oder Kalibrierung in bestimmten zeitlichen Intervallen oder jeweils nach einer bestimmten Anzahl von Messungen durchführt.

**Patentansprüche**

1. Vorrichtung zur Messung von optischen Remissionswerten eines Messobjekts und zur Anzeige der Remissionswerte und/oder von diesen abgeleiteten Messwerten, mit einem Gehäuse (1), einem im Gehäuse beweglich angeordneten optischen Messkopf (2) zur Beaufschlagung des Messobjekts (O) mit Messlicht und zum Auffangen des vom Messobjekt remittierten Lichts, einer optoelektrischen Wandlereinrichtung (4) zur Umwandlung des vom Messkopf aufgefangenen Lichts in entsprechende elektrische Signale, einem Rechner (5) zur Verarbeitung der elektrischen Signale und zur Steuerung der Vorrichtung, einer mit dem Rechner zusammenarbeitenden Anzeigevorrichtung (6) zur optischen Darstellung der durch die Verarbeitung der elektrischen Signale gewonnenen Messwerte und mit mit dem Rechner zusammenarbeitenden Bedienungsorganen (7) zur Steuerung der Funktionen der Vorrichtung, wobei der Messkopf (2) bei Auslösung eines Messvorgangs durch den Rechner (5) gesteuert motorisch von einer Ruheposition ($P_0$) in eine Messposition ($P_M$) und nach dem Messvorgang wieder in die Ruheposition zurück bewegbar ist, **dadurch gekennzeichnet, dass** eine Kalibrierposition ($P_0$-$P_3$) vorgesehen ist, in die der Messkopf (2) durch den Rechner (5) gesteuert motorisch bewegbar ist, dass in dieser Kalibrierposition ein Kalibriermessobjekt (10-13) angeordnet ist, dass der Rechner (5) dazu ausgebildet ist, das Kalibriermessobjekt (10-13) auszumessen und dabei Kalibriermesswerte zu erzeugen, dass im Rechner (5) den Kalibriermesswerten entsprechende Referenzmesswerte gespeichert sind, und dass der Rechner (5) dazu ausgebildet ist, anhand der Kalibriermesswerte und der entsprechenden Referenzmesswerte eine Kalibrierung oder Überprüfung der Vorrichtung durchzuführen.

2. Vorrichtung nach Anspruch 1, **dadurch gekennzeichnet, dass** zwei oder mehrere Kalibrierpositionen ($P_0$-$P_3$) vorgesehen sind, in die der Messkopf (2) durch den Rechner (5) gesteuert motorisch bewegbar ist, dass in diesen Kalibrierposition je ein Kalibriermessobjekt (10-13) angeordnet ist, dass der Rechner (5) dazu ausgebildet ist, die Kalibriermessobjekte (10-13) auszumessen und dabei für jedes Kalibriermessobjekt Kalibriermesswerte zu erzeugen, dass im Rechner (5) für jedes Kalibriermessobjekt (10-13) den Kalibriermesswerten entsprechende Referenzmesswerte gespeichert sind, und dass der Rechner (5) dazu ausgebildet ist, anhand der für jedes Kalibriermessobjekt (10-13) ermittelten Kalibriermesswerte und der entsprechenden Referenzmesswerte eine Kalibrierung oder Überprüfung der Vorrichtung durchzuführen.

3. Vorrichtung nach einem der vorangehenden Ansprüche, **dadurch gekennzeichnet, dass** der Rechner (5) dazu ausgebildet ist, die Messung des bzw. der Kalibriermessobjekte (10-13) aufgrund einer benutzergesteuerten Auslösung oder zeit- oder ereignisgesteuert automatisch durchzuführen.

4. Vorrichtung nach einem der vorangehenden Ansprüche, **dadurch gekennzeichnet, dass** das oder eines der Kalibriermessobjekte (10) ein Weiss-Standard ist.

5. Vorrichtung nach einem der vorangehenden Ansprüche, **dadurch gekennzeichnet, dass** das oder eines der Kalibriermessobjekte (11-13) ein Farb-Standard ist.

6. Vorrichtung nach einem der vorangehenden Ansprüche, **dadurch gekennzeichnet, dass** einige der Kalibriermessobjekte (11-13) zusammen als Dichtestufenkeil ausgebildet sind.

7. Vorrichtung nach einem der vorangehenden Ansprüche, **dadurch gekennzeichnet, dass** der Messkopf (2) mit einem während der Ausmessung des bzw. der Kalibriermessobjekte (10-13) durch den Rechner (5) gesteuert selektiv in den Beleuchtungs- und/oder Auffangstrahlengang einbringbaren optischen Filter (9a) ausgestattet ist.

8. Vorrichtung nach einem der vorangehenden Ansprüche, **dadurch gekennzeichnet, dass** der Messkopf (2) mit zwei oder mehreren unterschiedlichen, während der Ausmessung des bzw. der Kalibriermessobjekte (10-13) durch den Rechner (5) gesteuert selektiv in den Beleuchtungs- und/oder Auffangstrahlengang einbringbaren optischen Filtern (9a) ausgestattet ist.

9. Vorrichtung nach einem der Ansprüche 7-8, **dadurch gekennzeichnet, dass** das bzw. eines der Filter (9a) ein Bandenglas ist.

10. Vorrichtung nach einem der vorangehenden Ansprüche, **dadurch gekennzeichnet, dass** der Rechner (5) dazu ausgebildet ist, die Kalibriermesswerte als entsprechende Referenzmesswerte abzuspeichern.

11. Vorrichtung nach einem der vorangehenden Ansprüche, **dadurch gekennzeichnet, dass** der Rechner (5) dazu ausgebildet ist, die Kalibriermesswerte mit den entsprechenden Referenzmesswerten zu vergleichen und das Vergleichsergebnis anzuzeigen.

12. Vorrichtung nach einem der vorangehenden Ansprüche, **dadurch gekennzeichnet, dass** sie ein vorzugsweise spektral messendes Farbmessgerät ist.

13. Vorrichtung nach den Ansprüchen 5 und 12, **dadurch gekennzeichnet, dass** die Kalibriermesswerte und die entsprechenden Referenzmesswerte Farbkoordinaten sind und dass das Vergleichsergebnis der Farbabstand zwischen den durch die gemessenen und die gespeicherten Farbkoordinaten repräsentierten Farben ist.

14. Vorrichtung nach den Ansprüchen 4 und 12, **dadurch gekennzeichnet, dass** die Kalibriermesswerte und die entsprechenden Referenzmesswerte spektrale Remissionswerte sind und dass das Vergleichsergebnis die Quadratwurzel aus der Summe der Quadrate der Differenzen zwischen den gemessenen und den gespeicherten spektralen Remissionswerten ist.

15. Vorrichtung nach den Ansprüchen 6 und 12, **dadurch gekennzeichnet, dass** die Kalibriermesswerte und die entsprechenden Referenzmesswerte spektrale Remissionswerte sind und dass das Vergleichsergebnis für jeden Spektralbereich (j) ein Qualitätsmass ($K_j$) ist, das die Quadratwurzel aus der Summe der Quadrate der Differenzen zwischen den im betreffenden Spektralbereich an den einzelnen Kalibriermessobjekten des Dichtestufenkeils gemessenen ($R_{M_{i,j}}$) und den entsprechenden gespeicherten ($R_{S_{i,j}}$) spektralen Remissionswerten ist.

## Claims

1. Device for measuring optical reflectance values of a measurement object and for displaying the reflectance values and/or measurement values derived therefrom, comprising a housing (1), an optical measuring head (2) which is movably arranged in the housing for acting on the measurement object (O) with measuring light and for collecting the light that is reflected by the measurement object, an optoelectric converter (4) for converting the light collected by the measuring head into corresponding electrical signals, a computer (5) for processing the electrical signals and for controlling the device, a display unit (6) which cooperates with the computer for optically displaying the measurement values obtained by processing the electrical signals, and operating elements (7) which cooperate with the computer for controlling the functions of the device, wherein, when a measurement process is triggered, the measuring head (2) can be moved by a motor, in a manner controlled by the computer (5), from a rest position ($P_0$) into a measurement position ($P_M$) and then back into the rest position after the measurement process, **characterized in that** a calibration position ($P_0$-$P_3$) is provided, into which the measuring head (2) can be moved by a motor in a manner controlled by the computer (5), **in that** a calibration measurement object (10-13) is arranged in this calibration position, **in that** the computer (5) is designed to measure the calibration measurement object (10-13) and to generate calibration measurement values, **in that** reference measurement values which correspond to the calibration measurement values are stored in the computer (5), and **in that** the computer (5) is designed to calibrate or check the device on the basis of the calibration measurement values and the corresponding reference measurement values.

2. Device according to Claim 1, **characterized in that** two or more calibration positions ($P_1$-$P_3$) are provided, into which the measuring head (2) can be moved by a motor in a manner controlled by the computer (5), **in that** a calibration measurement object (10-13) is arranged in each of these calibration positions, **in that** the computer (5) is designed to measure the calibration measurement objects (10-13) and to generate calibration measurement values for each calibration measurement object, **in that** reference measurement values which correspond to the calibration measurement values are stored in the computer (5) for each calibration measurement object (10-13), and **in that** the computer (5) is designed to calibrate or check the device on the basis of the calibration measurement values determined for each calibration measurement object (10-13) and the corresponding reference measurement values.

3. Device according to either of the preceding claims, **characterized in that** the computer (5) is designed to measure the calibration measurement object or objects (10-13) when triggered to do so by a user or automatically in a time-controlled or event-controlled manner.

4. Device according to any of the preceding claims, **characterized in that** the calibration measurement object or one of the calibration measurement objects (10) is a white standard.

5. Device according to any of the preceding claims, **characterized in that** the calibration measurement object or one of the calibration measurement objects (11-13) is a colour standard.

6. Device according to any of the preceding claims, **characterized in that** some of the calibration measurement objects (11-13) are formed together as a density stage wedge.

7. Device according to any of the preceding claims, **characterized in that** the measuring head (2) is equipped with an optical filter (9a) which can be selectively brought into the illumination and/or collection beam path, in a manner controlled by the computer (5), during measurement of the calibration measurement object or objects (10-13).

8. Device according to any of the preceding claims, **characterized in that** the measuring head (2) is equipped with two or more different optical filters (9a) which can be selectively brought into the illumination and/or collection beam path, in a manner controlled by the computer (5), during measurement of the calibration measurement object or objects (10-13).

9. Device according to either of Claims 7 and 8, **characterized in that** the filter or one of the filters (9a) is a band glass.

10. Device according to any of the preceding claims, **characterized in that** the computer (5) is designed to store the calibration measurement values as corresponding reference measurement values.

11. Device according to any of the preceding claims, **characterized in that** the computer (5) is designed to compare the calibration measurement values with the corresponding reference measurement values and to display the result of the comparison.

12. Device according to any of the preceding claims, **characterized in that** it is a colour measurement device which preferably measures spectrally.

13. Device according to Claims 5 and 12, **characterized in that** the calibration measurement values and the corresponding reference measurement values are colour coordinates, and **in that** the result of the comparison is the colour distance between the colours represented by the measured colour coordinates and the stored colour coordinates.

14. Device according to Claims 4 and 12, **characterized in that** the calibration measurement values and the corresponding reference measurement values are spectral reflectance values, and **in that** the result of the comparison is the square root of the sum of the squares of the differences between the measured spectral reflectance values and the stored spectral reflectance values.

15. Device according to Claims 6 and 12, **characterized in that** the calibration measurement values and the corresponding reference measurement values are spectral reflectance values, and **in that** the result of the comparison for each spectral range (j) is a quality measurement ($K_j$) which is the square root of the sum of the squares of the differences between the spectral reflectance values ($R_{M_{i,j}}$) measured in the relevant spectral range at the individual calibration measurement objects of the density stage wedge and the corresponding stored spectral reflectance values ($R_{S_{i,j}}$).

## Revendications

1. Dispositif de mesure de valeurs de réflectance optique d'un objet à mesurer et d'affichage de valeurs de réflectance optique et/ou de valeurs mesurées déduites de ces dernières, avec un boîtier (1), une tête de mesure optique (2) disposée de façon mobile dans le boîtier pour l'application sur l'objet à mesurer (O) d'une lumière de mesure et pour capter la luminance de réflexion de l'objet à mesurer, avec un dispositif optoélectronique de transducteurs (4) pour la transformation de la lumière captée par la tête de mesure en des signaux électriques correspondants, avec un ordinateur (5) pour le traitement des signaux électriques et pour la commande du dispositif, avec un dispositif d'affichage (6) coopérant avec l'ordinateur, pour la représentation optique des valeurs de mesure obtenues par le traitement des signaux électriques et avec des organes de manoeuvre (7) coopérant avec l'ordinateur pour commander les fonctions du dispositif, lors du déclenchement d'un processus de mesure, la tête de mesure (2) étant déplaçable de façon contrôlée par moteur par l'ordinateur (5) d'une position de repos ($P_0$) dans une position de mesure ($P_M$) et après le processus de mesure en retour dans la position de repos, **caractérisé en ce qu'**est prévue une position de calibrage ($P_0$ à $P_3$), dans laquelle la tête de mesure (2) peut être déplacée de façon contrôlée par moteur par l'ordinateur (5), **en ce qu'**un objet de calibrage à mesurer (10 à 13) est disposé dans cette position de calibrage, **en ce que** l'ordinateur (5) est conçu de façon à mesurer l'objet de calibrage à mesurer (10 à 13) et à générer à cet effet des valeurs de mesure de calibrage, **en ce que** des valeurs de mesure de référence correspondant aux valeurs de mesure de calibrage sont mémorisées dans l'ordinateur (5) et **en ce que** l'ordinateur (5) est conçu pour procéder à un calibrage ou à une vérification du dispositif, à l'aide des valeurs de mesure de calibrage et des valeurs de mesure de référence correspondantes.

2. Dispositif selon la revendication 1, **caractérisé en ce que** sont prévues deux ou plusieurs positions de calibrage ($P_0$ à $P_3$), dans lesquelles la tête de mesure (2) peut être déplacée de façon contrôlée par moteur par l'ordinateur (5), **en ce qu'**un objet de calibrage à mesurer (10 à 13) est disposé dans chacune de ces positions de calibrage, **en ce que** l'ordinateur (5) est conçu pour mesurer les objets de calibrage à mesurer (10 à 13) et pour générer à cet effet des valeurs de mesure de calibrage pour chaque objet de calibrage à mesurer, **en ce que** pour chaque objet de calibrage à mesurer (10 à 13), des valeurs de mesure de référence correspondant au valeurs de mesure de calibrage sont mémorisées dans l'ordinateur (5) et **en ce que** l'ordinateur (5) est conçu pour procéder à un calibrage ou à une vérification du dispositif à l'aide des valeurs de mesure de calibrage déterminées pour chaque objet de calibrage à mesurer (10 à 13) et des valeurs de référence correspondantes.

3. Dispositif selon l'une quelconque des revendications précédentes, **caractérisé en ce que** l'ordinateur (5) est conçu pour procéder automatiquement à la mesure du ou des objets de calibrage à mesurer (10 à 13) suite à un déclenchement commandé par l'opérateur ou de façon contrôlée par le temps ou par un événement.

4. Dispositif selon l'une quelconque des revendications précédentes, **caractérisé en ce que** l'un des objets de calibrage à mesurer (10) est un standard de blanc.

5. Dispositif selon l'une quelconque des revendications précédentes, **caractérisé en ce que en ce que** l'un des objets de calibrage à mesurer (11 à 13) est un standard de couleur.

6. Dispositif selon l'une quelconque des revendications précédentes, **caractérisé en ce que** quelques uns des objets de calibrage à mesurer (11 à 13) sont conçus en commun en tant que coin sensitométrique de niveau de densité.

7. Dispositif selon l'une quelconque des revendications précédentes, **caractérisé en ce que** la tête de mesure (2) est équipée d'un filtre optique (9a) pouvant être amené de façon sélective contrôlée par l'ordinateur (5) dans la trajectoire de faisceau d'éclairage et/ou de captage pendant la mesure du ou des objets de calibrage à mesurer (10 à 13).

8. Dispositif selon l'une quelconque des revendications précédentes, **caractérisé en ce que** la tête de mesure (2) est équipée de deux ou de plusieurs filtres optiques (9a) différents pouvant être amenés de façon sélective contrôlée par l'ordinateur (5) dans la trajectoire de faisceau d'éclairage et/ou de captage pendant la mesure du ou des objets de calibrage à mesurer (10 à 13).

9. Dispositif selon l'une quelconque des revendications 7 ou 8, **caractérisé en ce que** le, respectivement l'un des filtres (9a) est un verre sous forme de bande.

10. Dispositif selon l'une quelconque des revendications précédentes, **caractérisé en ce que** l'ordinateur (5) est conçu pour mémoriser les valeurs de mesure de calibrage en tant que valeurs de mesure de référence correspondantes.

11. Dispositif selon l'une quelconque des revendications précédentes, **caractérisé en ce que** l'ordinateur (5) est conçu pour comparer les valeurs de mesure de calibrage avec les valeurs de mesure de référence correspondantes et pour afficher le résultat de la comparaison.

12. Dispositif selon l'une quelconque des revendications précédentes, **caractérisé en ce qu'**il est constitué par un chromatomètre de préférence à mesure spectrale.

13. Dispositif selon les revendications 5 et 12, **caractérisé en ce que** les valeurs de mesure de calibrage et les valeurs de mesure de référence sont des coordonnées chromatiques et **en ce que** le résultat de la comparaison est la différence chromatique entre les couleurs représentées par les coordonnées chromatiques mesurées et les coordonnées chromatiques mémorisées.

14. Dispositif selon les revendications 4 et 12, **caractérisé en ce que** les valeurs de mesure de calibrage et les valeurs de mesure de référence correspondantes sont des valeurs de réflectance spectrale et **en ce que** le résultat de la comparaison est la racine carrée de la somme des carrés des différences entre les valeurs de réflectance spectrale mesurées et les valeurs de réflectance spectrale mémorisées.

15. Dispositif selon les revendications 6 et 12, **caractérisé en ce que** les valeurs de mesure de calibrage et les valeurs de mesure de référence correspondantes sont des valeurs de réflectance spectrale et **en ce que** le résultat de la comparaison pour chaque domaine spectral (j) est une valeur de qualité (Kj), qui est la racine carrée de la somme des carrés des différences entre les valeurs de réflectance spectrale mesurées ($R_{Mi,j}$) dans le domaine spectral concerné sur chacun des objets de mesure de calibrage du coin sensitométrique de niveau de densité et les valeurs de réflectance spectrale mémorisées ($R_{Si,j}$) correspondantes.

Fig. 1

Fig. 2

Fig. 3